# EUROPEAN PATENT SPECIFICATION

(11) **EP 3 660 200 B1**
(45) Date of publication and mention of the grant of the patent: **22.02.2023**
(21) Application number: 19211637.4
(22) Date of filing: 26.11.2019
(51) Int. Cl.: D06F 39/14

(54) **LAUNDRY TREATING APPARATUS**
WÄSCHEBEHANDLUNGSVORRICHTUNG
APPAREIL DE TRAITEMENT DU LINGE

(30) Priority: 27.11.2018 KR 20180148952; 23.10.2019 KR 20190132496
(43) Date of publication of application: 03.06.2020
(73) Proprietor: LG Electronics Inc., Seoul 07336 (KR)
(72) Inventor: YOU, Jungsang, Seoul 08592 (KR); KWON, Yongwoo, Seoul 08592 (KR); SEO, Minsoo, Seoul 08592 (KR)
(74) Representative: Ter Meer Steinmeister & Partner

(56) References cited:
- EP-A1- 2 434 046
- EP-A1- 3 162 945
- CN-A- 106 906 622
- DE-U1-202009 005 678

## Description

This application claims the priority of Korean Patent Applications No. 10-2018-0148952, filed on November 27, 2018, and No. 10-2019-0132496, filed on October 23, 2019.

### BACKGROUND

### 1. Technical Field

The present disclosure relates to a laundry treating apparatus having a door configured to open and close a laundry introduction opening of a body.

### 2. Description of the Related Art

A laundry treating apparatus includes an apparatus for washing laundry (or clothes), an apparatus for drying laundry, and an apparatus for washing and drying laundry together. In the laundry treating apparatus, washing laundry is a stroke/course of removing contaminants from the laundry through reaction between water and detergents, and drying laundry is a stroke/course of removing moisture contained in the laundry by use of a hot air supply device provided in the laundry treating apparatus.

Generally, a laundry treating apparatus includes a body having a laundry introduction opening, and a door configured to open and close the laundry introduction opening. In a case that the door includes a circular front glass, a mechanical object (a pin, a hook, etc.) for guiding a precise attachment position when a door frame is coupled to the front glass, cannot be formed at the front glass due to a characteristic of glass. Further, there is no physical reference point for locating the front glass to a proper position of the door frame, due to a characteristic of the circular shape.

Accordingly, an alignment structure for attaching a circular front glass to a proper position of a circular door frame should be provided, and research on a method to make the alignment structure invisible from the outside of a door is required.

Further, an adhesive is used to attach the front glass to the door frame. According to experimental results, the amount of an adhesive to be applied, and time taken for an adhesive filled in an adhesive gun to harden are variable according to an adhesive application method. Thus, research on a method capable of reducing the amount of an adhesive to be applied, and capable of prolonging time taken for an adhesive filled in an adhesive gun to harden, is ongoing.

EP 3 162 945 A1 presents a laundry treating apparatus including a main body having a laundry introduction opening, and a door capable of opening and closing the laundry introduction opening, wherein the door includes a door cover defining an appearance of the door, and provided with a transparent region and an opaque region surrounding the transparent region, a display module disposed on a rear surface of the door cover and capable of outputting visual information through the transparent region, and a touch sensor attached to a rear surface of the door cover to cover the transparent region and capable of sensing a touch input applied to the transparent region, wherein the touch sensor is provided with an align mark to allow the touch sensor to be attached to a correct position with respect to the transparent region.

### SUMMARY

Therefore, a first aspect of the present disclosure is to provide a laundry treating apparatus including a front glass formed to have a front surface and a rear surface being flat, the front glass having a complete circular shape.

A second aspect of the present disclosure is to provide an align structure between a front glass and a door frame, at the time of attaching the front glass of a circular shape to the door frame of a circular shape.

A third aspect of the present disclosure is to provide a structure to make the align structure invisible from the outside of a door.

A fourth aspect of the present disclosure is to provide a method capable of minimizing usages of an adhesive for attachment between a front glass and a door frame, and capable of prolonging time taken for the adhesive filled in an adhesive gun to harden.

The object is solved by the features of the independent claim. Preferred embodiments are given in the dependent claims.

In order to achieve the first aspect and in accordance with the purpose of this specification, as embodied and broadly described herein, there is provided a laundry treating apparatus, comprising: a body having a laundry introduction opening; and a door configured to open and close the laundry introduction opening, wherein the door includes: a door frame rotatably coupled to the body, opening facing the laundry introduction opening in a closed state of the door; and a front glass attached to the door frame, the front glass is forming a front appearance of the door.

The front glass includes a transparent region corresponding to the opening, and an opaque region formed to enclose the transparent region.

Preferably, the front glass may be formed of a glass material.

The front glass is formed as a complete circle which has flat front and rear surfaces and a preset radius.

A mounting guide having a preset inner diameter may be provided at the door frame.

Optionally, the mounting guide may protrude to enclose an outer circumferential surface of the front glass in a ring shape.

An adhesive filling groove for accommodating an adhesive for attaching the front glass to the door frame may be formed on a front surface of the door frame. The adhesive filling groove may be formed in a ring shape having a preset radius, along a circumference of the mounting guide, so as to enclose the opening.

An interval between the mounting guide and the adhesive filling groove may be constantly maintained along the circumference of the mounting guide.

In order to achieve the second aspect and in accordance with the purpose of this specification, as embodied and broadly described herein, there is provided a laundry treating apparatus, comprising: a body having a laundry introduction opening; and a door configured to open and close the laundry introduction opening, wherein the door includes: a door frame rotatably coupled to the body, and having an opening which faces the laundry introduction opening in a closed state of the door; a front glass attached to the door frame.

The front glass may form a front appearance of the door.

The front glass is formed to have a circular shape.

Preferably, an adhesive may be applied between the door frame and the front glass, and configured to attach the front glass to the door frame.

The front glass includes: a transparent region corresponding to the opening; an opaque region formed to enclose the transparent region; and a transparent align mark formed in the opaque region, and configured to guide an attachment position of the front glass to the door frame.

Preferably, the adhesive may be applied (or disposed) to cover the align mark.

Here, the door frame may include: an outer frame arranged so that an outer circumferential part thereof encloses an outer side surface of the front glass; and an inner frame having an outside connected to the outer circumferential part of the outer frame, and having an inside connected to an outer periphery of a door window.

Here, the align mark may be formed to have a shape corresponding to a shape of the opaque region formed at the front glass. Accordingly, the align mark may be formed to have a transparency in the opaque region, and may be configured to guide the attachment position of the front glass.

The align mark may be formed to have a circular shape so as to contact a lowermost end of the front glass.

The align mark may be formed to have a polygonal shape positioned so that one edge contacts a lowermost end of the front glass.

Here, an align guide may be formed at the outer frame, at a position corresponding to the align mark.

The front glass may be formed as a complete circle having a preset radius.

A mounting guide having a preset inner diameter may be provided at the door frame, the mounting guide protruding to enclose an outer circumferential surface of the front glass, in a ring shape.

The front glass may be formed such that a front surface and a rear surface thereof are flat.

A center of the opening may be positioned to be eccentric from a center of the door frame, and a center of the transparent region may be positioned to be eccentric from a center of the front glass.

The center of the transparent region may be located at a position corresponding to the center of the opening.

As an example of the front glass, the front glass may include a glass body formed of a glass material having a transparency; and a shielding layer arranged to cover a rear surface of the glass body and forming the opaque region.

The transparent region and the align mark may be a part where the shielding layer is not arranged.

The shielding layer may be formed by being glass-printed on the rear surface of the glass body.

As another example of the front glass, the front glass may include a glass body formed of a glass material having a transparency; and a film arranged to cover the rear surface of the glass body. The film may include a transparent part formed to have a transparency in correspondence to the transparent region; an opaque part formed to have a non-transparency in correspondence to the opaque region; and an align part formed to have a transparency in correspondence to the align mark.

As still another example of the front glass, the front glass may include a glass body formed of a glass material having a transparency; and a film arranged to cover the rear surface of the glass body. And the film may include a first hole formed to correspond to the transparent region; an opaque part formed to have a non-transparency in correspondence to the opaque region; and a second hole formed to correspond to the align mark.

Further, in order to achieve the second aspect and not forming part of the present invention, there is provided a method for fabricating a door provided at a laundry treating apparatus, the method comprising: mounting a front glass to a front glass mounting jig, so that a guide mark formed at the front glass mounting jig is seen through a transparent align mark formed at the front glass; and attaching the front glass to a door frame, wherein the front glass includes a transparent region corresponding to an opening of the door frame; and an opaque region formed to enclose the transparent region, and wherein the align mark is formed in the opaque region.

The front glass may be formed as a complete circle having a preset radius. And a mounting guide having a preset inner diameter may be provided at the door frame, the mounting guide protruding to enclose an outer circumferential surface of the front glass, in a ring shape.

A center of the opening may be positioned to be eccentric from a center of the door frame, and a center of the transparent region may be positioned to be eccentric from a center of the front glass.

The attaching of the front glass to the door frame includes applying an adhesive to the door frame mounted to a door frame mounting jig; lifting the front glass mounted to the front glass mounting jig in an absorbing manner, and then mounting onto the door frame mounted to the door frame mounting jig; moving the door frame mounting jig to a compression jig; attaching the front glass to the door frame by using the compression jig; separating the door frame mounting jig from the compression jig, and moving to an initial position; and separating an assembly of the front glass attached to the door frame from the door frame mounting jig.

In order to achieve the third aspect and in accordance with the purpose of this specification, the adhesive may be formed in the same color as the opaque region.

An adhesive filling groove for filling the adhesive may be formed at the door frame.

Preferably, the adhesive filling groove may include an adhesive application part configured to provide a space for applying the adhesive, and formed to enclose the opening.

Preferably, the adhesive filling groove may include at least one adhesive collection part formed to extend in parallel along the adhesive application part, at one or both sides of the adhesive application part, so as to collect the adhesive leaking of the adhesive application part.

The align mark may be arranged to be overlapped with the adhesive application part.

In order to achieve the fourth aspect and not forming part of the present invention, there is provided a method for fabricating a door provided at a laundry treating apparatus, the method comprising: mounting a front glass to a front glass mounting jig, and mounting a door frame to a door frame mounting jig; applying an adhesive to the door frame; lifting the front glass by absorption, and then mounting onto the door frame; moving the door frame mounting jig to a compression jig; attaching the front glass to the door frame by using the compression jig; separating the door frame mounting jig from the compression jig, and moving to an initial position; and separating an assembly of the front glass attached to the door frame, from the door frame mounting jig, wherein in the applying of the adhesive to the door frame, the adhesive is applied along an adhesive filling groove formed to enclose an opening of the door frame, plural times in a divided manner.

The adhesive applied along the adhesive filling groove multiple times in the divided or interrupted manner may be distinguished from each other by a predetermined separation interval.

In the applying of the adhesive to the door frame, the adhesive may be applied at least 4 times.

The adhesive filling groove may include an adhesive application part configured to provide a space for applying the adhesive, and formed to enclose the opening.

The adhesive filling groove may include at least one adhesive collection parts formed to extend in parallel along the adhesive application part, at one or both sides of the adhesive application part, so as to collect the adhesive leaking of the adhesive application part.

In the attaching of the front glass to the door frame by using the compression jig, and the separating of the door frame mounting jig from the compression jig and moving to the initial position, a part of the adhesive filled in an adhesive gun may be discarded, so as to prevent a blocking of a hole of the adhesive gun which applies the adhesive.

In the attaching of the front glass to the door frame by using the compression jig, and the separating of the door frame mounting jig from the compression jig and moving to the initial position, the amount of the adhesive to be discarded may be set to be larger than the amount of the adhesive to be applied in the applying of the adhesive to the door frame.

In order to achieve the fourth aspect and in accordance with the purpose of this specification, as embodied and broadly described herein, there is provided a laundry treating apparatus, comprising: a body having a laundry introduction opening; and a door configured to open and close the laundry introduction opening, wherein the door includes: a door frame rotatably coupled to the body, having an opening which faces the laundry introduction opening in a closed state of the door, and having an adhesive filling groove formed to enclose the opening; a front glass attached to the door frame to thus form a front appearance of the door; and an adhesive applied to the adhesive filling groove, and configured to attach the front glass to the door frame, wherein the adhesive is applied plural times along the adhesive filling groove with a separation interval.

The adhesive filling groove may include an adhesive application part configured to provide a space for applying the adhesive, and formed to enclose the opening; and adhesive collection parts formed to extend in parallel along the adhesive application part, at both sides of the adhesive application part, so as to collect the adhesive leaking to the both sides of the adhesive application part.

The adhesive application part may be formed in a ring shape having a preset radius.

A center of the adhesive application part may correspond to a center of the front glass.

The front glass may be formed of a glass material, and may be formed as a complete circle having a preset radius.

The front glass may be formed such that a front surface and a rear surface thereof are flat.

The adhesive filling groove may be formed in a ring shape having a preset radius, and a center of the adhesive filling groove may correspond to a center of the front glass.

The front glass may include a transparent region corresponding to the opening; an opaque region formed to enclose the transparent region; and a transparent align mark formed in the opaque region, and configured to guide an attachment position of the front glass to the door frame. And the adhesive may be applied (or disposed) to cover the align mark.

The adhesive may be formed in the same color as the opaque region.

Firstly, since the front glass formed of a glass material is formed as a complete circle and the front surface and the rear surface thereof are formed to be flat, a sophisticated feeling of the door may be more enhanced than in the conventional door cover formed of a synthetic resin material and formed as an incomplete circle having a convex front surface.

Secondly, when the front glass is mounted to the front glass mounting jig, the guide mark formed at the front glass mounting jig is aligned to be seen through the transparent align mark formed in the opaque region of the front glass. This may allow an alignment between the front glass and the door frame.

Thirdly, the adhesive is arranged to cover the align mark, and is formed in the same color as the opaque region. This may allow the align mark for the alignment not to be discerned easily from the outside of the door. Accordingly, the appearance of the door may be enhanced.

Fourthly, in the applying of the adhesive to the door frame, the adhesive is applied along the adhesive application part formed to enclose the opening of the door frame, plural times in a divided manner. This may minimize usages of the adhesive for attachment between the front glass and the door frame, and may prolong time taken for the adhesive filled in the adhesive gun to harden.

Further, in the attaching of the front glass to the door frame by using the compression jig, and the separating of the door frame mounting jig from the compression jig and moving to the initial position, a part of the adhesive filled in the adhesive gun is discarded. This may prevent a blocking of a hole of the adhesive gun for applying the adhesive.

### BRIEF DESCRIPTION OF THE DRAWINGS

FIG. 1 is a perspective view showing an embodiment of a laundry treating apparatus according to the present disclosure.
FIG. 2 is a frontal view of a door shown in FIG. 1.
FIG. 3 is a disassembled perspective view of the door shown in FIG. 2.
FIG. 4 is a planar view of the door shown in FIG. 2.
FIG. 5 is a left side surface view of the door shown in FIG. 2.
FIG. 6 is a rear view of the door shown in FIG. 2.
FIG. 7A is a frontal view of a front glass shown in FIG. 3.
FIG. 7B is a conceptual view showing a state that a position of a front glass is guided by an align guide formed at an outer frame.
FIG. 7C is a conceptual view showing an arrangement relation between an align guide and an align mark.
FIG. 8 shows the front glass of FIG. 7A, which is seen from the upper side, the lower side, the left side and the right side, respectively.
FIG. 9 is a frontal view of a door frame shown in FIG. 3.
FIG. 10 is a sectional view taken along line 'A-A' in FIG. 2.
FIG. 11 is a conceptual view schematically showing an apparatus for attaching a front glass shown in FIG. 3 to a proper position of a door frame.
FIG. 12 is a flow chart for explaining an assembly process of a front glass and a door frame, using the apparatus of FIG. 11.
FIG. 13 is a conceptual view of a front glass mounting jig shown in FIG. 11.
FIG. 14 is a conceptual view for explaining a method for mounting a front glass to a proper position of a front glass mounting jig in FIG. 12.
FIG. 15 is an enlarged view of part 'B' shown in FIG. 2.

### DETAILED DESCRIPTION OF THE EMBODIMENTS

Hereinafter, a laundry treating apparatus according to the present disclosure will be described in detail with reference to the accompanying drawings.

A singular representation may include a plural representation unless it represents a definitely different meaning from the context.

The same or equivalent components may be provided with the same or similar reference numbers, even in different embodiments, and description thereof will not be repeated.

In describing the present disclosure, if a detailed explanation for a related known function or construction is considered to unnecessarily divert the gist of the present disclosure, such explanation has been omitted but would be understood by those skilled in the art.

The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

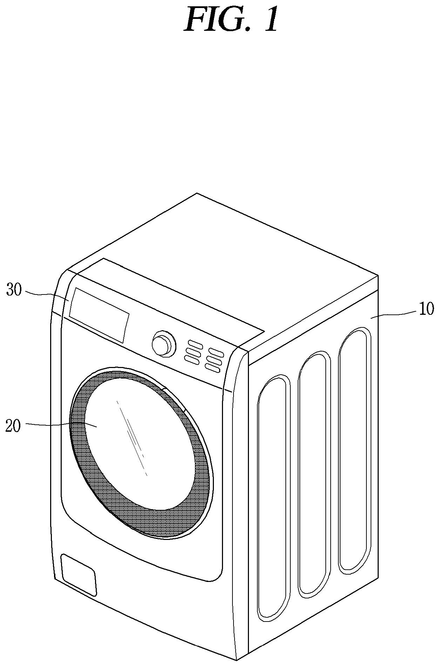

FIG. 1 is a perspective view showing an embodiment of a laundry treating apparatus according to the present disclosure.

Referring to FIG. 1, the laundry treating apparatus includes a body 10, a controller 30 and a door 20.

The body 10 forms the appearance of the laundry treating apparatus, and is provided with a laundry introduction opening for introducing laundry therein. In this embodiment, the laundry introduction opening is formed on a front surface of the body 10 having a hexahedron shape. The laundry introduction opening may be formed to have a circular shape.

A laundry accommodation portion, an inner space communicated with the laundry introduction opening, is provided in the body 10. Laundry is accommodated in the laundry accommodation portion through the laundry introduction opening.

As an example, if the laundry treating apparatus is configured as a laundry drying apparatus, the laundry accommodation portion may be configured as a drum rotatably provided in the body 10.

As another example, if the laundry treating apparatus of the present disclosure is configured as an apparatus for washing and drying laundry, the laundry accommodation portion may be configured as a tub provided in the body 10 and configured to store washing water, and a drum rotatably provided in the tub and configured to accommodate laundry therein.

The controller 30 is configured to display visual information related to a stroke performed in the laundry treating apparatus to a user, and to receive a user's manipulation. For this, the controller 30 may be provided with a display for displaying visual information, and a knob or a button for receiving an input. Alternatively, the controller 30 may be configured as a touch screen having the above two functions.

The controller 30 may be provided at the body 10 or the door 20. In the drawing, the controller 30 is positioned at an upper part of the body 10, above the door 20.

The door 20 is configured to be relatively moveable with respect to the body 10 in order to open and close the laundry introduction opening. In the drawing, the door 20 is configured to be relatively moveable with respect to the body 10 through a hinge unit 24.

Hereinafter, the door 20 will be explained in more detail.

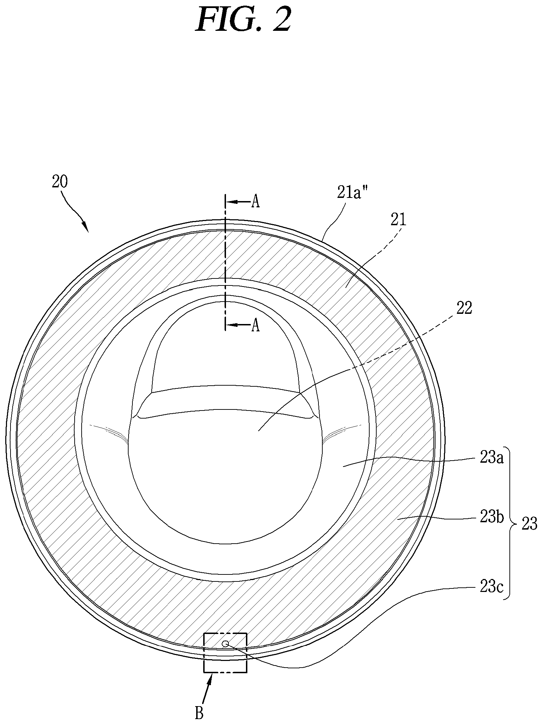

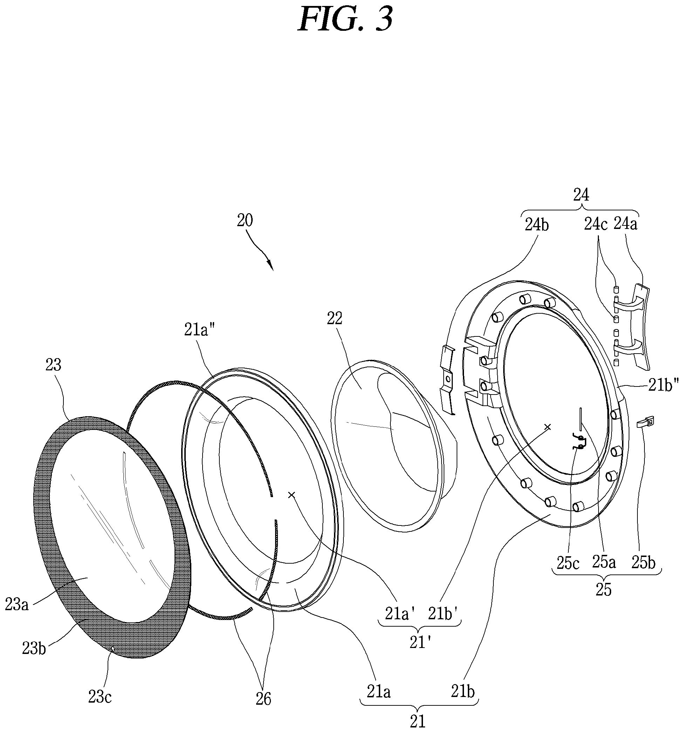

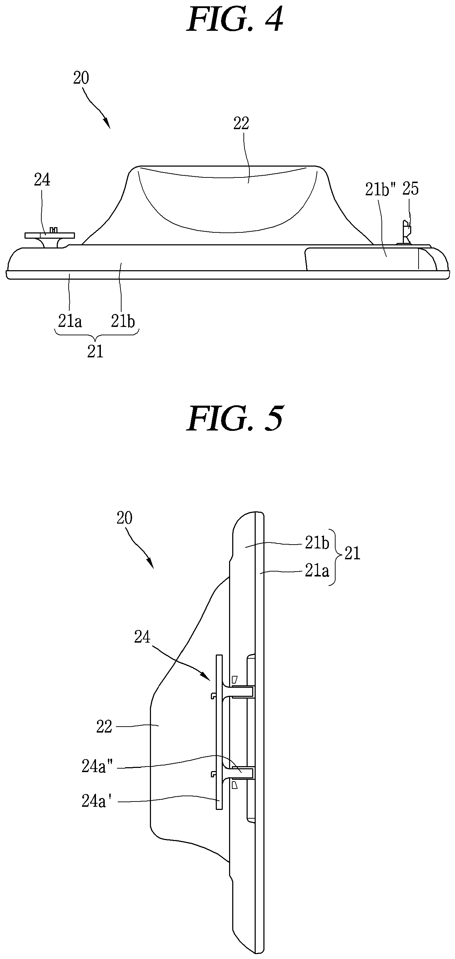

FIG. 2 is a frontal view of the door 20 shown in FIG. 1. FIG. 3 is a disassembled perspective view of the door 20 shown in FIG. 2. FIG. 4 is a planar view of the door 20 shown in FIG. 2.

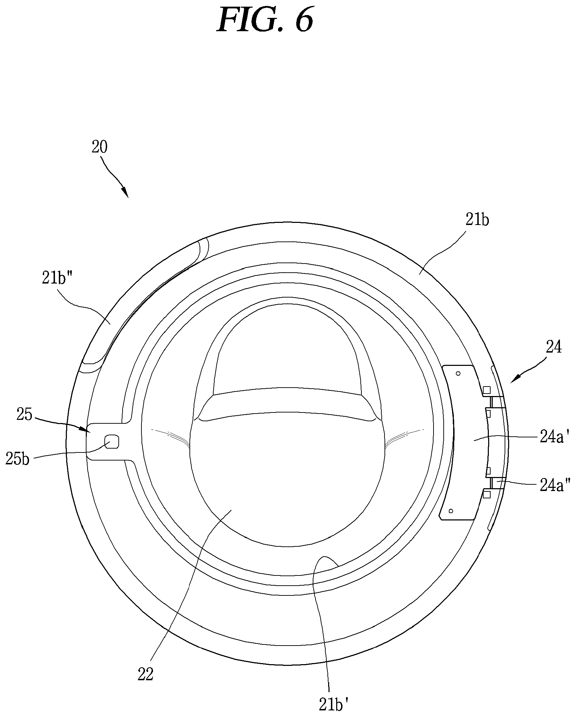

FIG. 5 is a left side surface view of the door 20 shown in FIG. 2. And FIG. 6 is a rear view of the door 20 shown in FIG. 2.

Referring to FIGS. 2 to 6, the door 20 includes a door frame 21, a door window 22 and a front glass 23.

The door frame 21 is rotatably/or pivotable/ hingeable coupled to the body 10 by the hinge unit 24. The door frame 21 includes an outer frame 21a and an inner frame 21b. The outer frame 21a and the inner frame 21b may be formed of a synthetic resin material (e.g., an ABS material, a PC material, etc.).

Each of the outer frame 21a and the inner frame 21b may be formed to have a ring shape, and may be coupled to each other by being arranged to be overlapped to each other in back and forth directions. Each of the outer frame 21a and the inner frame 21b may be provided with a hook (not shown) on an outer circumferential part thereof to be coupled to each other.

Each of the outer frame 21a and the inner frame 21b may be formed to have its width changed in a circumferential direction.

That is, a distance (a width) between an outer diameter of the outer frame 21a and an inner diameter (a diameter of an opening) may be configured to be increased (widened) towards a lowermost end from an uppermost end. Likewise, a distance (a width) between an outer diameter of the inner frame 21b and the inner diameter (the diameter of the opening) may be configured to be increased (widened) towards a lowermost end from an uppermost end.

Further, a protection layer (not shown) may be formed on a front surface and an outer circumferential surface of the outer frame 21a, by a chrome plating. The outer frame 21a may be completely immersed in a chrome plating solution for a chrome plating, and a protection layer (not shown) can be formed on the entire surface of the outer frame 21a.

And the inner frame 21b may be completely immersed in a chrome plating solution for a chrome plating, and a protection layer (not shown) can be formed on the entire surface of the inner frame 21b.

The protection layer (not shown) may be configured to coat a silver metallic luster on the outer frame 21a. Under the configuration, there is an effect that the protection layer (not shown) looks like circular water drops by the bright silver color. Further, the protection layer (not shown) may cause a sophisticated feeling when seen by naked eyes.

For reference, the names of the outer frame 21a and the inner frame 21b originate from that the outer frame 21a is towards the outside of the body 10, and the inner frame 21b is towards the inside of the body 10, on the basis of the door frame 21 itself when the door 20 is in a closed state. Without such a distinction, the outer frame 21a and the inner frame 21b may be referred to as a first frame and a second frame, respectively.

The door frame 21 is provided with an opening 21' which faces the laundry introduction opening in a closed state of the door 20. The opening 21' may be formed to be concentric with the door frame 21. Alternatively, as shown, the opening 21' may be formed to be eccentric from the door frame 21. The opening 21' may be formed to have a circular shape.

The opening 21' may be referred to as a door window hole in that the door window 22 is installed at the opening 21'. For the formation of the opening 21', openings 21a', 21b' are formed at the outer frame 21a and the inner frame 21b, respectively.

A recess portion 21b" may be formed at the inner frame 21b. In a closed state of the door 20, a user may open the door 20 by pulling the door 20 with putting his or her hand into the recess portion 21b".

The door window 22 is installed at the door frame 21 in correspondence to the opening 21'. The door window 22 is formed of a synthetic resin material having a transparency, and is arranged to correspond to the laundry introduction opening in a closed state of the door 20.

The door window 22 may be formed of a glass material, and an outer periphery (not shown) of the door window 22 may be inserted for coupling between the outer frame 21a and the inner frame 21b.

The outer periphery (not shown) of the door window 22 may be formed as a plane, and may be fixed between a rear end of a curved surface of the outer frame 21a and an inner side end of the inner frame 21b. Accordingly, the door 20 may be installed so as to be rotatable with respect to the body 10 in back and forth directions, by the hinge unit 24.

As aforementioned, the door 20 may be installed so as to be rotatable with respect to the body 10 by the hinge unit 24.

The hinge unit 24 may include a hinge 24a, a hinge holder 24b, and a bush 24c.

The hinge 24a is fixed to the body 10, and is rotatably coupled to the door frame 21. The hinge 24a may include a base portion 24a' fixed to the body 10 in the form of a plate, and a rotation coupling portion 24a" protruding from the base portion 24a' and rotatably coupled to the door frame 21. The rotation coupling portion 24a" may be provided in plurality in number, so as to be spaced apart from each other up and down.

The hinge holder 24b is coupled to the door frame 21, and is configured to restrict separation of the rotation coupling portion 24a". The hinge holder 24b is arranged to cover the rotation coupling portion 24a". The hinge holder 24b may be coupled to the hinge holder 24b.

The bush 24c is inserted into a rotation shaft of the rotation coupling portion 24a", thereby making the rotation shaft rotate smoothly.

Under a structure that the hinge unit 24 is mounted to one side of the door 20, a locking device 25 for locking or unlocking the door 20 to or from the body 10 is provided at another side of the door 20.

The locking device 25 may include a shaft 25a, a door latch 25b and an elastic member 25c.

The shaft 25a is configured to pass through the door latch 25b, and is mounted to the door frame 21. The elastic member 25c provides an elastic force for restoration when the door latch 25b rotates. Accordingly, the door latch 25b is configured to rotate and restore to the door frame 21.

The front glass 23 is attached to the door frame 21, thereby forming the appearance of the front surface of the door 20. The front glass 23 is arranged to cover the opening 21' of the door frame 21. In the drawings, the front glass 23 is attached to the outer frame 21a.

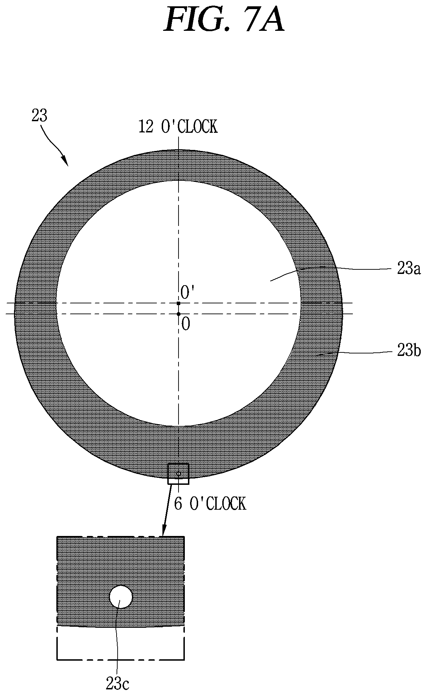

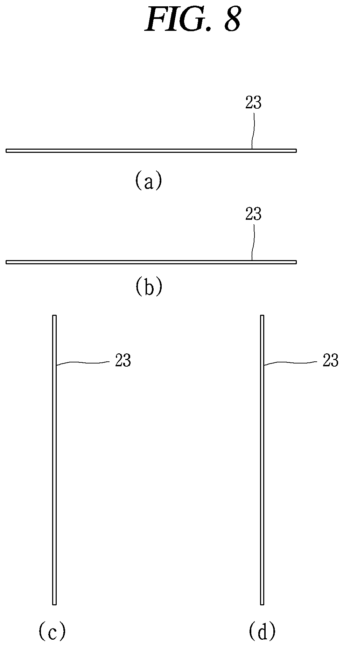

FIG. 7A is a frontal view of the front glass 23 shown in FIG. 3. And FIG. 8 shows the front glass 23 of FIG. 7A, which is seen from the upper side, the lower side, the left side and the right side, respectively.

Referring to FIGS. 7A and 8, the front glass 23 includes a transparent region 23a and an opaque region 23b. The transparent region 23a means a region configured to pass at least part of light therethrough, in order to make the opposite side or the inside visible. Thus, the transparent region 23a is a concept to include a semi-transparent region 23a.

In a state that the front glass 23 has been attached to the door frame 21, the transparent region 23a is arranged to correspond to the opening 21' and the door window 22. Thus, in a closed state of the door 20, a user may view the laundry accommodation portion through the transparent region 23a.

If a center of the opening 21' is eccentric from a center of the door frame 21, a center (O') of the transparent region 23a may be positioned to be eccentric from a center (O) of the front glass 23.

The center (O') of the transparent region 23a is located at a position corresponding to the center of the opening 21'. Here, the corresponding position includes not only a complete consistency of the center, but also the same eccentric direction of the center. That is, the center (O') of the transparent region 23a and the center of the opening 21' may be consistent (same) with each other, or an eccentric direction of the transparent region 23a may be the same as an eccentric direction of the opening 21'.

In the drawings, the center of the opening 21' is positioned to be eccentric from the center of the door frame 21, towards an upper side (a 12 o'clock direction), and the center (O') of the transparent region 23a is also positioned to be eccentric from the center (O) of the front glass 23, towards an upper side (a 12 o'clock direction). Here, the center (O') of the transparent region 23a may be consistent with the center of the opening 21'.

The opaque region 23b is formed to enclose the transparent region 23a. The opaque region 23b is arranged to cover the remaining part except for the opening 21' of the door frame 21.

The transparent region 23a and the opaque region 23b which encloses the transparent region 23a may be clearly distinguished from each other by the opaque region 23b, in the form of a boundary line.

Alternatively, a boundary between the transparent region 23a and the opaque region 23b may be formed to be indistinct by a halftone technique, for a visual movement from the transparent region 23a to the opaque region 23b. For this, the opaque region 23b includes a plurality of shielding dots formed around the transparent region 23a, and the plurality of shielding dots may be formed to have a density lowered towards the transparent region 23a.

The front glass 23 is formed as a complete circle having a preset radius. The front glass 23 is formed of a glass material. Thus, the front glass 23 is formed such that a front surface and a rear surface thereof are flat. As shown in FIG. 8, the front glass 23 is formed as a disc having a constant thickness, which is not curved when viewed in any directions, i.e., the upper, lower, right and left sides.

Since the front glass 23 formed of a glass material is formed as a complete circle and the front surface and the rear surface thereof are formed to be flat, a sophisticated feeling of the door 20 may be more enhanced than in the conventional door cover formed of a synthetic resin material and formed as an incomplete circle having a convex front surface.

A transparent align mark 23c is formed in the opaque region 23b, i.e. at least partly surrounded by the opaque region 23b, preferably it is fully surrounded. The align mark 23c is configured to guide an attachment position of the front glass 23 to the door frame 21. In the drawings, the align mark 23c of a circular shape is formed at a lower side (a 6 o'clock direction) of the front glass 23. However, the present disclosure is not limited to this. The align mark 23c may be formed to have a polygonal shape or a linear shape. The position of the align mark 23c may be variable.

The align mark 23c may be formed to have a shape corresponding to the shape of the opaque region 23b of the front glass 23.

Also, the align mark 23c may be formed of a transparent material formed in the opaque region, thereby guiding an attachment position of the front glass 23.

As aforementioned, the align mark 23c may be formed to have a circular shape. Here, the align mark 23c may be formed to have a circular shape which can point-contact a lowermost end of the front glass 23.

In this case, an attachment position of the front glass 23 to the outer frame 21a may be guided as the align mark 23c having a circular shape contacts the lowermost end of the front glass 23. For instance, if a lower end of the align mark 23c having a circular shape is arranged to point-contact the lowermost end of the front glass 23, an attachment position of the front glass 23 to the outer frame 21a may be determined.

Also, the align mark 23c may be formed to have a polygonal shape. The align mark 23c may be formed to have a polygonal shape of which one edge is positioned to contact the lowermost end of the front glass 23. For instance, the align mark 23c may be formed to have a polygonal shape of which one edge is configured to contact the lowermost end of the front glass 23.

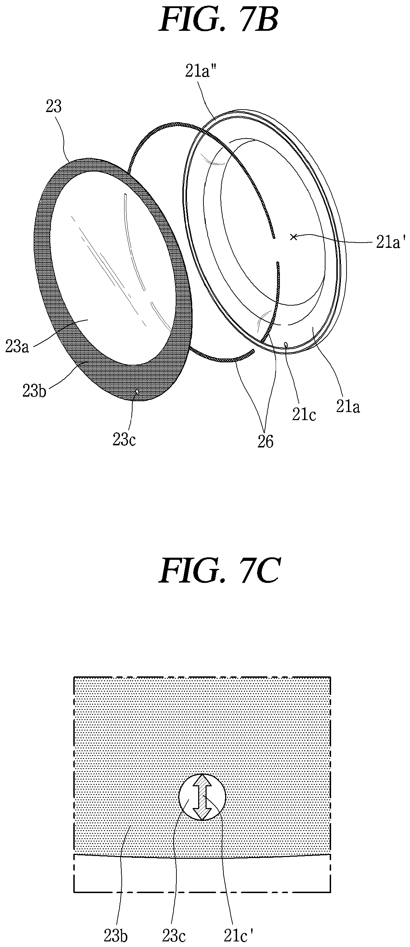

As shown in FIG. 7B, the position of the front glass 23 may be guided by an align guide 21c formed at the outer frame 21a.

The align guide 21c may be formed at the outer frame 21a at a position corresponding to the align mark 23c.

As shown in FIG. 7B, the align guide 21c may be formed at one side of the outer frame 21a at a position corresponding to the align mark 23c. The align guide 21c may be formed at one side of a front surface of the outer frame 21a, and may serve as an indicator.

The align guide 21c may have a circular shape or a polygonal shape to correspond to the align mark 23c.

For instance, if the align mark 23c formed at the opaque region has a circular shape, the align guide 21c may be also formed to have a circular shape of a corresponding size. If the align mark 23c formed at the opaque region has a polygonal shape, the align guide 21c may be also formed to have a polygonal shape in correspondence thereto.

That is, the align guide 21c may guide the position of the front glass 23 to be attached to the door frame, by being arranged to be overlapped with the align mark 23c.

As shown in FIG. 7C, the align guide 21c may be formed to have a shape of an arrow 21c'.

In a case that the front glass 23 is mounted to the door frame 21, one end of the arrow 21c' which constitutes the align guide 21c is arranged to contact one end of the align mark 23c. This may allow the position of the front glass 23 to be attached to the door frame 21, to be set more precisely.

The align guide 21c is formed at one side of the front surface of the outer frame 21a, and both ends of the arrow 21c' which constitutes the align guide 21c are arranged to contact both ends or the edge of the circumference of the align mark 23c, respectively. This may allow the position of the front glass 23 to be attached to the door frame 21, to be determined more precisely.

A method for aligning the position of the front glass 23 by using the align mark 23c will be explained later.

The front glass 23 may implement the transparent region 23a, the opaque region 23b and the align mark 23c, by the following layer structure.

For instance, the front glass 23 may include a glass body formed of a glass material having a transparency, and a shielding layer arranged to cover a rear surface of the glass body and forming the opaque region 23b. Here, a part where the shielding layer is not arranged forms the transparent region 23a and the align mark 23c. The shielding layer may be formed by being glass-printed on the rear surface of the glass body.

As another example, the front glass 23 may include a glass body formed of a glass material having a transparency, and a film arranged to cover the rear surface of the glass body. The film may include a transparent part formed to have a transparency in correspondence to the transparent region 23a, an opaque part formed to have a non-transparency in correspondence to the opaque region 23b, and an align part formed to have a transparency in correspondence to the align mark 23c.

As still another example, the front glass 23 may include a glass body formed of a glass material having a transparency, and a film arranged to cover the rear surface of the glass body. This example is differentiated from the above example in that the film includes a first hole formed to correspond to the transparent region 23a, an opaque part formed to have a non-transparency in correspondence to the opaque region 23b, and a second hole formed to correspond to the align mark 23c. That is, there is a difference in that a part of the film, corresponding to the transparent region 23a and the align mark 23c, is formed to have a transparency, or is punched.

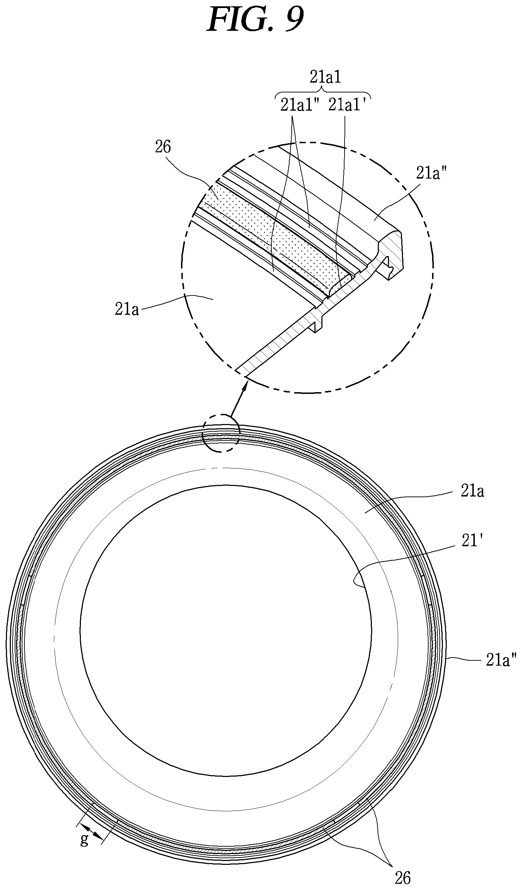

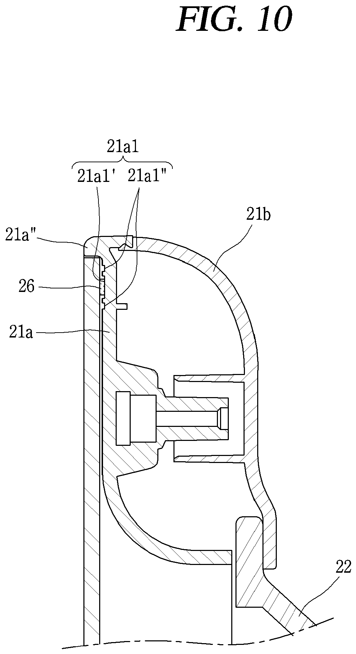

FIG. 9 is a frontal view of the door frame 21 shown in FIG. 3. And FIG. 10 is a sectional view taken along line 'A-A' in FIG. 2.

Referring to FIGS. 9 and 10, the door frame 21 includes the outer frame 21a and the inner frame 21b.

The front glass 23 is configured to be attached to the front surface of the outer frame 21a. The inner frame 21b is coupled to a rear side of the outer frame 21a. The outer frame 21a and the inner frame 21b may be coupled to each other by at least one of a pin-groove coupling, a hook coupling, a screw coupling, a bonding coupling, etc.

A mounting guide 21a" may be formed to protrude along a circumference of the outer frame 21a. The mounting guide 21a" is formed to extend in a ring shape, and forms a space to accommodate the front glass 23 therein.

The mounting guide 21a" is arranged to enclose an outer circumferential surface of the front glass 23. The mounting guide 21a" is formed to have a preset inner diameter. That is, the mounting guide 21a" is formed to have a complete circular shape. The inner diameter of the mounting guide 21a" may correspond to an outer diameter of the front glass 23.

The mounting guide 21a" may protrude by a predetermined height, so as to form the same plane as an upper surface of the front glass 23. Under the configuration, since there is no stepped-pulley between the mounting guide 21a" and the front glass 23, a more simple appearance may be implemented.

The mounting guide 21a" is formed to protrude forward from an outer circumferential end of the front surface of the outer frame 21a, so as to enclose an outer circumferential surface of the front glass 23. And the mounting guide 21a" may support a load of the front glass 23, and may protect the side surfaces of the front glass 23 from an external impact.

A protruding length of the mounting guide 21a" may be formed to cover at least 2/3 of a thickness of the front glass 23, approximately. Here, if the protruding length of the mounting guide 21a" is too short, an external impact may be applied to the outer circumferential surface of the front glass 23, and the load of the front glass cannot be supported sufficiently.

The mounting guide 21a" may protrude from an edge part of the front surface of the outer frame 21a. The mounting guide 21a" may be formed in a ring shape, and may form a space to accommodate the front glass 23 therein.

The mounting guide 21a" may be formed to have a preset inner diameter, and may be formed in a circular shape. The inner diameter of the mounting guide 21a" may have a size corresponding to the outer diameter of the front glass 23. And the mounting guide 21a" may be configured to enclose the outer circumferential surface of the front glass 23.

An adhesive 26 is arranged between the door frame 21 and the front glass 23, for a coupling therebetween. An adhesive filling groove 21a1 for filling the adhesive 26 is formed at the door frame 21. In the drawings, the adhesive filling groove 21a1 is formed on the front surface of the outer frame 21a.

The adhesive filling groove 21a1 is formed in a ring shape having a preset radius, along a circumference of the mounting guide 21a", so as to enclose the opening 21'. An interval between the mounting guide 21a" and the adhesive filling groove 21a1 may be constantly maintained along the circumference of the mounting guide 21a". That is, a center of the adhesive filling groove 21a1 may correspond to a center of the mounting guide 21a".

As shown, the adhesive filling groove 21a1 may include an adhesive application part 21a1' and adhesive collection parts 21a1".

The adhesive application part 21a1' is a part for applying the adhesive 26, and is formed in a ring shape which encloses the opening 21'. An interval between the mounting guide 21a" and the adhesive application part 21a1' may be constantly maintained along the circumference of the mounting guide 21a". In this case, a center of the adhesive application part 21a1' corresponds to the center of the mounting guide 21a". Further, since the mounting guide 21a" is formed to enclose an outer circumference of the front glass 23 having a complete circular shape, the center of the adhesive application part 21a1' also corresponds to a center of the front glass 23.

The adhesive collection parts 21a1" configured to collect the adhesive 26 which leaks to the inside and the outside of the adhesive application part 21a1'are provided at both sides of the adhesive application part 21a1'. The adhesive collection parts 21a1" may be formed to extend in parallel along the adhesive application part 21a1', in a spaced state from the adhesive application part 21a1' by a predetermined interval.

That is, the adhesive collection parts 21a1" includes a first adhesive collection part of a ring shape which encloses the adhesive application part 21a1', and a second adhesive collection part of a ring shape positioned in the adhesive application part 21a1'. That is, the adhesive application part 21a1' is formed to enclose the second adhesive collection part. Here, a center of the first adhesive collection part and a center of the second adhesive collection part correspond to the center of the adhesive application part 21a1'.

The adhesive application part 21a1' is a part where the adhesive 26 is applied, and the adhesive collection parts 21a1" are provided against an overflow of the adhesive 26. Accordingly, the adhesive collection parts 21al" may have a narrower width than the adhesive application part 21a1'.

Under the structure, in the process of coupling the front glass 23 to the outer frame 21a, even if the adhesive 26 filled in the adhesive collection parts 21a1" leaks, the adhesive 26 may be collected to the adhesive collection parts 21a1" provided at the inside and the outside of the adhesive application part 21al'. This may prevent a lowering of the appearance quality due to leakage of the adhesive 26.

Also, under the structure, the adhesive application part 21a1' may be arranged to be close to an edge part of the outer frame 21a, to the maximum. Here, since a corresponding non-coupling part of an edge part of the front glass 23 is minimized, a coupling intensity may be enhanced.

If a door cover formed of a synthetic resin material is used as the front glass 23, a mechanical object (a pin, a hook, etc.) for guiding a precise attachment position when coupling the door cover to the door frame 21 may be formed at the door cover. For example, a pin may be formed on a rear surface of the door cover, and a groove for inserting the pin may be formed at the door frame 21. Then, by a pin-groove coupling, the door cover may be attached to a proper position of the door frame 21.

However, if the front glass 23 formed of a glass material is used, there is a problem that a mechanical object for guiding a precise attachment position when coupling the front glass to the door frame 21 cannot be formed at the front glass 23. Therefore, the front glass 23 should be attached to a proper position of the door frame 21 by another method.

Hereinafter, an apparatus for attaching the front glass 23 to a proper position of the door frame 21, and a method for fabricating the door 20 by using the apparatus will be explained.

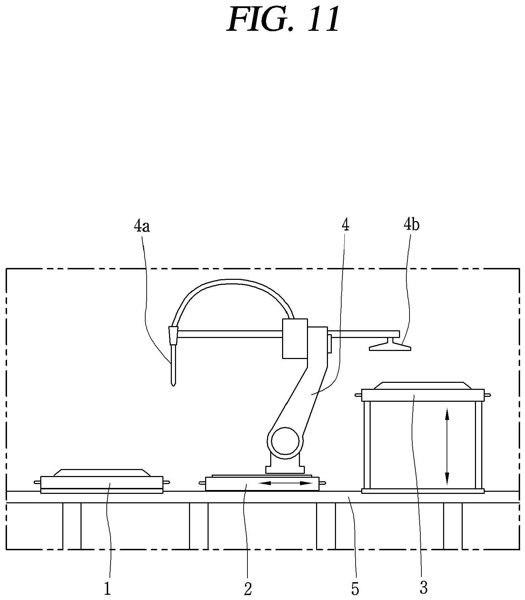

FIG. 11 is a conceptual view schematically showing an apparatus for attaching the front glass 23 shown in FIG. 3 to a proper position of the door frame 21.

Referring to FIG. 11, the apparatus includes a front glass mounting jig 1, a door frame mounting jig 2, a compression jig 3, and a robot arm 4.

The door frame mounting jig 2 is formed to be horizontally moveable through an automated rail 5. The automated rail 5 is formed to extend up to the compression jig 3, so that the door frame mounting jig 2 is moveable up to the compression jig 3.

The robot arm 4 has a movement range for covering the front glass mounting jig 1 and the door frame mounting jig 2 (the initial position). The robot arm 4 is provided with an adhesive gun 4a and an absorbing part 4b.

Hereinafter, a method for fabricating the door 20 by using the apparatus will be explained.

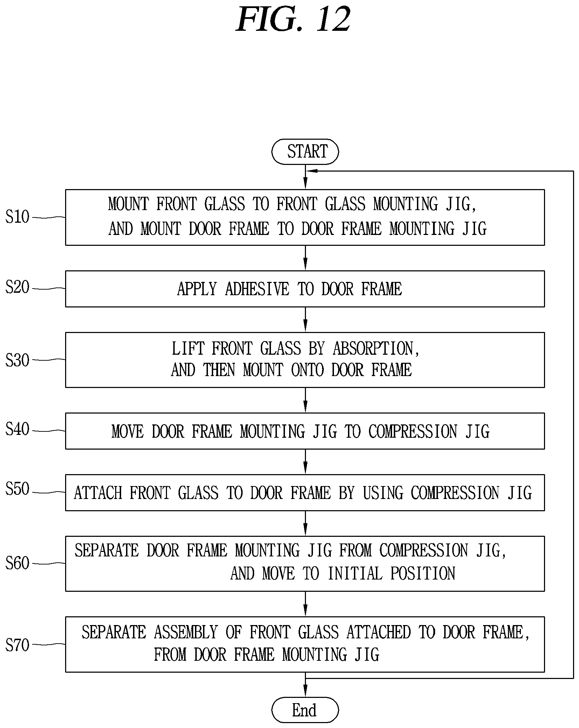

FIG. 12 is a flow chart for explaining an assembly process of the front glass 23 and the door frame 21, using the apparatus of FIG. 11.

Referring to FIG. 12, the front glass 23 is mounted to the front glass mounting jig 2, and the door frame 21 is mounted to the door frame mounting jig 2 (S10). The two processes may be performed regardless of the order.

As can be seen from the fabrication method to be explained later, a position of the front glass 23 mounted to the front glass mounting jig 1 is an attachment position of the front glass 23 to the door frame 21. Thus, the front glass 23 should be mounted to a proper position of the front glass mounting jig 1.

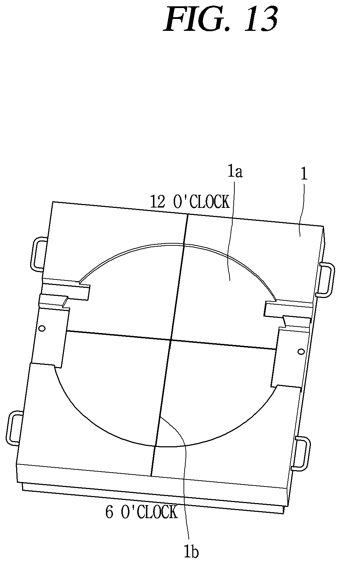

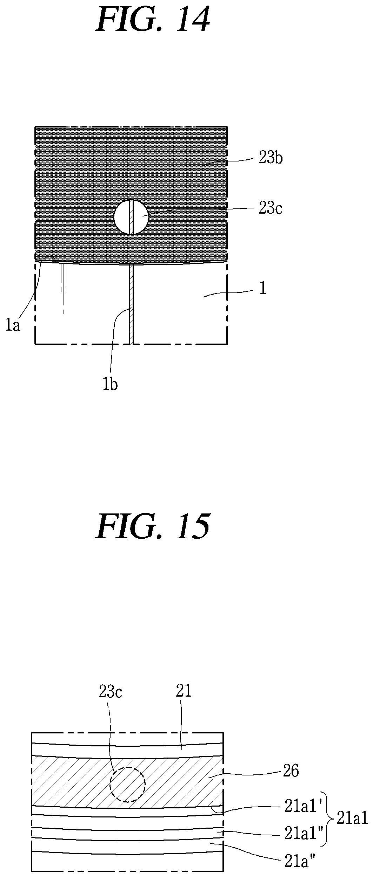

FIG. 13 is a conceptual view of the front glass mounting jig shown in FIG. 11. And FIG. 14 is a conceptual view for explaining a method for mounting the front glass 23 to a proper position of the front glass mounting jig 1 in FIG. 12.

Referring to FIG. 13, the front glass mounting jig 1 is provided with a front glass mounting portion 1a recessed from an upper surface. The front glass mounting portion 1a is formed to have a size corresponding to the front glass 23. Thus, an inner circumferential surface of the front glass mounting portion 1a may be arranged to face an outer circumferential surface of the front glass 23 with a very small preset interval.

Since the front glass 23 is formed to have a circular shape, the front glass 23 may be rotated in a mounted state to the front glass mounting portion 1a. That is, a position of the front glass 23 mounted to the front glass mounting portion 1a is not limited to a specific position.

In order to guide an attachment position of the front glass 23 to the front glass mounting jig 1, a guide mark 1b is formed at the front glass mounting jig 1, and the transparent align mark 23c is formed in the opaque region 23b of the front glass 23.

In the drawings, the guide mark 1b is formed as a straight line which connects an upper side (a 12 o'clock direction) and a lower side (a 6 o'clock direction) of the front glass 23. However, the present disclosure is not limited to this. That is, the guide mark 1b may be formed to have a polygonal shape, a circular shape, a point, etc., not a line. The position of the guide mark 1b may be changed.

Referring to FIG. 14, once the front glass 23 is positioned so that the guide mark 1b formed at the front glass mounting jig 1 is seen through the align mark 23c of the front glass 23, the front glass 23 is mounted to a proper position of the front glass mounting jig 1.

Referring to FIG. 12 again, next, the adhesive 26 is applied to the door frame 21 mounted to the door frame mounting jig 2 (S20). The application of the adhesive 26 may be performed precisely by the robot arm 4 and the adhesive gun 4a mounted to the robot arm 4. In this case, the robot arm 4 may be configured to move to the door frame mounting jig 2 from an initial position, to apply the adhesive 26 to the door frame 21 by using the adhesive gun 4a, and then to return to the initial position.

In a general case, the adhesive 26 is applied along the adhesive filling groove 21a1 at a time (an entire or continuous application method). However, in the present disclosure, the adhesive 26 may be applied along the adhesive filling groove 21a1 formed to enclose the opening 21' of the door frame 21, multiple times in a divided manner (a divided application method).

The adhesive 26 applied along the adhesive filling groove 21a1 multiple times in the divided manner may be distinguished from each other by a predetermined separation interval (g). That is, the adhesive 26 applied each time is arranged with the predetermined separation interval (g). In the drawings, the adhesive 26 is applied at least 4 times.

According to such a divided application method, there is an advantage that the amount of the adhesive 26 to be applied is reduced, even though it takes a more application time than in the aforementioned general entire application method. Further, according to such a divided application method, since the adhesive 26 is supplied to the adhesive gun 4a little by little at the time of each application, time taken to harden the adhesive 26 filled in the adhesive gun 4a can be prolonged more than in the aforementioned general entire application method.

Then, the absorbing part 4b of the robot arm 4 lifts the front glass 23 mounted to the front glass mounting jig 1 in an absorbing manner, and then mounts the front glass 23 onto the door frame 21 mounted to the door frame mounting jig 2 (S30). Then, the robot arm 4 may be configured to return to the initial position.

Next, the door frame mounting jig 2 is moved to the compression jig 3 (S40). The door frame mounting jig 2 may be moved to the compression jig 3 through the automated rail 5.

Next, the front glass 23 is attached to the door frame 21 by using the compression jig 3 (S50). In the drawings, the front glass 23 moved to a position below a cover of the compression jig 3 is pressurized by a downward movement of the cover, thereby being attached to the door frame 21.

Next, the door frame mounting jig 2 is separated from the compression jig 3, and is moved to the initial position (S60). In the drawings, the cover is moved to the upper side, the initial position, and the door frame mounting jig 2 returns to the initial position through the automated rail 5.

In the attaching of the front glass 23 to the door frame 21 by using the aforementioned compression jig 3, and the separating of the door frame mounting jig 2 from the compression jig 3 and moving to the initial position, a part of the adhesive 26 filled in the adhesive gun 4a is discarded. This is in order to prevent a blocking of a hole of the adhesive gun 4a for applying the adhesive 26.

More specifically, an assembly process of the front glass 23 and the door frame 21 is repeatedly performed. Here, if the adhesive gun 4a is not used after the adhesive 26 is applied to the adhesive filling groove 21a1, before the application process is repeated, the adhesive 26 may harden to cause a blocking of the hole of the adhesive gun 4a. For prevention of this, a discarding of the part of the adhesive 26 filled in the adhesive gun 4a is added in a process while the adhesive 26 is repeatedly applied to the adhesive filling groove 21a1.

Here, the amount of the adhesive 26 to be discarded is set to be larger than the amount of the adhesive 26 to be applied in the aforementioned applying of the adhesive 26 to the door frame 21.

Then, the assembly of the front glass 23 attached to the door frame 21 is separated from the door frame mounting jig 2 (S70).

The align mark 23c for attaching the front glass 23 to a proper position of the door frame 21 is formed at the front glass 23 which forms the front appearance of the door 20. Accordingly, if the align mark 23c remains as it is, an aesthetic feeling may be degraded externally. Especially, since the align mark 23c is formed in the opaque region 23b so as to have a transparency, it seems to be more remarkable.

Hereinafter, a structure to make the align mark 23c invisible from the outside of the door 20 will be explained.

FIG. 15 is an enlarged view of part 'B' shown in FIG. 2. In the drawings, for understanding, the front glass 23 is not displayed, but only the align mark 23c is displayed.

Referring to FIG. 15, the adhesive 26 is formed of an opaque material, and is arranged to cover the align mark 23c at a side of a rear surface of the front glass 23. That is, the align mark 23c is positioned to be overlapped on the adhesive 26 applied to the door frame 21. Thus, the align mark 23c is blocked by the adhesive 26.

The adhesive 26 may be formed in the same color as the opaque region 23b (e.g., black). In this case, the align mark 23c may be covered more completely.

As aforementioned, the adhesive filling groove 21a1 includes the adhesive application part 21a1' where the adhesive 26 is applied, and the adhesive collection parts 21a1" configured to collect the adhesive 26 which leaks to both sides of the adhesive application part 21a1'. In a relation between the front glass 23 and the door frame 21, the align mark 23c is arranged to be overlapped with the adhesive application part 21a1'.

Here, in the applying of the adhesive 26 to the door frame 21, even if the adhesive 26 is applied along the adhesive application part 21a1' plural times in a divided manner, it is set that the adhesive 26 should be applied to an overlapped part with the align mark 23c.

Like this, the adhesive 26 is arranged to cover the align mark 23c, and is formed of an opaque material, preferably, in the same color as the opaque region 23b. This may allow the align mark 23c for the alignment not to be discerned easily from the outside of the door 20. Accordingly, the appearance of the door 20 may be enhanced.

## Claims

1. A laundry treating apparatus, comprising:
a body (10) having a laundry introduction opening (21'); and
a door (20) configured to open and close the laundry introduction opening (21'), wherein the door (20) includes:
a door frame (21) rotatably coupled to the body (10), and having an opening (21b') facing the laundry introduction opening (21') in a closed state of the door (20); and
a front glass (23) attached to the door frame (21), wherein the front glass (23) includes:
a transparent region (23a) corresponding to the opening (21');
an opaque region (23b) enclosing the transparent region (23a); and
a transparent align mark (23c) formed in the opaque region (23b), and
**characterised in that**
the front glass (23) has a circular shape and is formed such that a front surface and a rear surface thereof are flat; and
the transparent align mark (23c) is configured to guide an attachment position of the front glass (23) to the door frame (21).

2. The laundry treating apparatus of claim 1, wherein the align mark (23c) has a shape corresponding to a shape of the opaque region (23b) formed at the front glass and/or the align mark (23c) is formed to have a transparency in the opaque region (23b).

3. The laundry treating apparatus of claim 1 or 2, wherein the align mark (23c) is formed to have a circular shape being arranged in or so as to contact a lowermost end of the front glass (23) and/or the align mark (23c) is formed to have a polygonal shape positioned so that one edge contacts a lowermost end of the front glass (23).

4. The laundry treating apparatus of any one of claims 1, 2 or 3, wherein the door frame (21) includes an outer frame (21a) and an inner frame (21b), the inner frame (21b) having an outside connected to the outer circumferential part of the outer frame (21a), and having an inside connected to an outer periphery of a door window (22).

5. The laundry treating apparatus of claim 4, wherein an outer circumferential part of the outer frame (21a) encloses an outer side surface of the front glass (23).

6. The laundry treating apparatus of apparatus of claim 4 or 5, wherein an align guide (21c) is formed at the outer frame (21a) at a position corresponding to the align mark (23c).

7. The laundry treating apparatus of any one of the preceding claims, wherein the front glass (23) is formed as a complete circle having a preset radius and/or is formed of a glass material and/or wherein a center (O') of the transparent region (23a) is positioned to be eccentric from the center (O) of the front glass (23) towards an upper side of the front glass (23).

8. The laundry treating apparatus of any one of the preceding claims, wherein the door frame (21) comprises a mounting guide (21a") having a preset inner diameter, wherein the mounting guide (21a") protrudes to enclose an outer circumferential surface of the front glass (21) in a ring shape.

9. The laundry treating apparatus of any one of the preceding claims, further comprising an adhesive (26) applied between the door frame (21) and the front glass (23) to attach the front glass (23) to the door frame (21).

10. The laundry treating apparatus of claim 9, wherein the door frame (21) includes an adhesive filling groove (21a1), wherein the adhesive filling groove (21a1) includes at least one of
an adhesive application part (21a1') configured to provide a space for applying the adhesive (26), and formed to enclose the opening (21a'); and
at least one adhesive collection part (21a1") formed to extend in parallel along the adhesive application part (21a1'), at one or both sides of the adhesive application part (21a1'), so as to collect the adhesive leaking of the adhesive application part (21a1').

11. The laundry treating apparatus of claim 10, wherein the align mark (23c) is arranged to be overlapped with the adhesive application part (21a1').

12. The laundry treating apparatus of any one of claims 9, 10 or 11 wherein the adhesive (26) is formed in the same color as the opaque region (23b).

13. The laundry treating apparatus of claim 10, 11 or 12, wherein the adhesive filling groove (21a1) is provided to be filled by an adhesive for attaching the front glass (23) to the door frame (21).

14. The laundry treating apparatus of any one of claim 10, 11, 12 or 13, wherein the adhesive filling groove (21a1) is formed on a front surface of the door frame (21), and/or the adhesive filling groove (21a1) is formed in a ring shape having a preset radius, along a circumference of the mounting guide (21a"), so as to enclose the opening (21a').

15. The laundry treating apparatus of any one of the claims 10, 11, 12, 13 or 14, wherein an interval between the mounting guide (21a") and the adhesive filling groove (21a1') is constant along the circumference of the mounting guide (21a").

## Patentansprüche

1. Wäschebehandlungsvorrichtung, die Folgendes umfasst:
einen Körper (10), der eine Wäscheeinfüllöffnung (21') hat; und
eine Tür (20), die konfiguriert ist, die Wäscheeinfüllöffnung (21') zu öffnen und zu schließen, wobei die Tür (20) Folgendes umfasst:
einen Türrahmen (21), der mit dem Körper (10) drehbar gekoppelt ist und eine Öffnung (21b') hat, die im geschlossenen Zustand der Tür (20) zur Wäscheeinfüllöffnung (21') zeigt; und
ein Frontglas (23), das am Türrahmen (21) befestigt ist, wobei das Frontglas (23) Folgendes umfasst:
einen lichtdurchlässigen Bereich (23a), der der Öffnung (21') entspricht;
einen lichtundurchlässigen Bereich (23b), der den lichtdurchlässigen Bereich (23a) umgibt; und
eine lichtdurchlässige Ausrichtungsmarkierung (23c), die im lichtundurchlässigen Bereich (23b) ausgebildet ist, und
**dadurch gekennzeichnet, dass**
das Frontglas (23) eine kreisförmige Form hat und so ausgebildet ist, dass eine Vorderseite und eine Rückseite flach sind; und
die lichtdurchlässige Ausrichtungsmarkierung (23c) konfiguriert ist, eine Befestigungsposition des Frontglases (23) am Türrahmen (21) zu führen.

2. Wäschebehandlungsvorrichtung nach Anspruch 1, wobei die Ausrichtungsmarkierung (23c) eine Form hat, die der Form des lichtundurchlässigen Bereichs (23b), der am Frontglas ausgebildet ist, entspricht, und/oder die Ausrichtungsmarkierung (23c) so ausgebildet ist, dass sie eine Lichtdurchlässigkeit im lichtundurchlässigen Bereich (23b) hat.

3. Wäschebehandlungsvorrichtung nach Anspruch 1 oder 2, wobei die Ausrichtungsmarkierung (23c) so ausgebildet ist, dass sie eine Kreisform hat, die in einem untersten Ende des Frontglases (23) angeordnet ist oder damit in Kontakt ist, und/oder die Ausrichtungsmarkierung (23c) so ausgebildet ist, dass sie eine Polygonform hat, die so positioniert ist, dass eine Kante mit einem untersten Ende des Frontglases (23) in Kontakt ist.

4. Wäschebehandlungsvorrichtung nach einem der Ansprüche 1, 2 oder 3, wobei der Türrahmen (21) einen Außenrahmen (21a) und einen Innenrahmen (21b) umfasst, wobei der Innenrahmen (21b) eine Außenseite hat, die mit dem Außenumfangsteil des Außenrahmens (21a) verbunden ist, und eine Innenseite hat, die mit dem Außenumfang eines Türfensters (22) verbunden ist.

5. Wäschebehandlungsvorrichtung nach Anspruch 4, wobei ein Außenumfangsteil des Außenrahmens (21a) eine äußere Seitenfläche des Frontglases (23) umgibt.

6. Wäschebehandlungsvorrichtung nach Anspruch 4 oder 5, wobei eine Ausrichtungsführung (21c) am Außenrahmen (21a) bei einer Position ausgebildet ist, die der Ausrichtungsmarkierung (23c) entspricht.

7. Wäschebehandlungsvorrichtung nach einem der vorhergehenden Ansprüche, wobei das Frontglas (23) als ein vollständiger Kreis ausgebildet ist, der einen festgelegten Radius hat, und/oder aus einem Glasmaterial gebildet ist und/oder wobei die Mitte (O') des lichtdurchlässigen Bereichs (23a) so positioniert ist, dass sie gegenüber der Mitte (O) des Frontglases (23) in Richtung einer Oberseite des Frontglases (23) exzentrisch ist.

8. Wäschebehandlungsvorrichtung nach einem der vorhergehenden Ansprüche, wobei der Türrahmen (21) eine Montageführung (21a") umfasst, die einen festgelegten Innendurchmesser hat, wobei die Montageführung (21a") so vorsteht, dass sie eine Außenumfangsfläche des Frontglases (21) in Ringform umgibt.

9. Wäschebehandlungsvorrichtung nach einem der vorhergehenden Ansprüche, die ferner einen Klebstoff (26) umfasst, der zwischen dem Türrahmen (21) und dem Frontglas (23) aufgetragen wird, um das Frontglas (23) am Türrahmen (21) zu befestigen.

10. Wäschebehandlungsvorrichtung nach Anspruch 9, wobei der Türrahmen (21) eine Klebstoffeinfüllrille (21a1) umfasst, wobei die Klebstoffeinfüllrille (21a1) wenigstens eines der folgenden Elemente umfasst:
ein Klebstoffauftragungsteil (21a1'), das konfiguriert ist, einen Raum zum Auftragen des Klebstoffs (26) bereitzustellen, und das so ausgebildet ist, dass es die Öffnung (21a') umgibt; und
wenigstens ein Klebstoffsammelteil (21a1"), das so ausgebildet ist, dass es parallel längs des Klebstoffauftragungsteils (21a1') auf einer oder beiden Seiten des Klebstoffauftragungsteils (21a1') verläuft, um den Klebstoff zu sammeln, der aus dem Klebstoffauftragungsteil (21a1') austritt.

11. Wäschebehandlungsvorrichtung nach Anspruch 10, wobei die Ausrichtungsmarkierung (23c) so angeordnet ist, dass sie mit dem Klebstoffauftragungsteil (21a1') überlappt.

12. Wäschebehandlungsvorrichtung nach einem der Ansprüche 9, 10 oder 11, wobei der Klebstoff (26) in der gleichen Farbe wie der lichtundurchlässige Bereich (23b) ausgebildet ist.

13. Wäschebehandlungsvorrichtung nach Anspruch 10, 11 oder 12, wobei die Klebstoffeinfüllrille (21a1) so vorgesehen ist, dass sie mit einem Klebstoff zum Befestigen des Frontglases (23) am Türrahmen (21) gefüllt wird.

14. Wäschebehandlungsvorrichtung nach einem der Ansprüche 10, 11, 12 oder 13, wobei die Klebstoffeinfüllrille (21a1) auf einer Vorderseite des Türrahmens (21) ausgebildet ist und/oder die Klebstoffeinfüllrille (21a1) in einer Ringform, die einen festgelegten Radius hat, längs des Umfangs der Montageführung (21a") ausgebildet ist, so dass sie die Öffnung (21a') umgibt.

15. Wäschebehandlungsvorrichtung nach einem der Ansprüche 10, 11, 12, 13 oder 14, wobei ein Abstand zwischen der Montageführung (21a") und der Klebstoffeinfüllrille (21a1') längs des Umfangs der Montageführung (21a") konstant ist.

## Revendications

1. Appareil de traitement de linge comportant :
une carrosserie (10) ayant un orifice d'introduction de linge (21') ; et
une porte (20) configurée pour ouvrir et fermer l'orifice d'introduction de linge (21'), dans lequel la porte (20) inclut :
un châssis de porte (21) couplé en rotation à la carrosserie (10), et ayant un orifice (21b') en face de l'orifice d'introduction de linge (21') dans un état fermé de la porte (20) ; et
une vitre avant (23) fixée au châssis de porte (21), dans lequel la vitre avant (23) inclut :
une zone transparente (23a) correspondant à l'orifice (21') ;
une zone opaque (23b) entourant la zone transparente (23a) ; et
une marque d'alignement transparente (23c) formée dans la zone opaque (23b), et
**caractérisé en ce que**
la vitre avant (23) a une forme circulaire et est formée de telle sorte qu'une surface avant et une surface arrière de celle-ci sont planes ; et
la marque d'alignement transparente (23c) est configurée pour guider une position de fixation de la vitre avant (23) sur le châssis de porte (21).

2. Appareil de traitement de linge selon la revendication 1, dans lequel la marque d'alignement (23c) a une forme correspondant à une forme de la zone opaque (23b) formée sur la vitre avant et/ou la marque d'alignement (23c) est formée pour avoir une transparence dans la zone opaque (23b).

3. Appareil de traitement de linge selon la revendication 1 ou 2, dans lequel la marque d'alignement (23c) est formée pour avoir une forme circulaire étant agencée dans une extrémité la plus basse de la vitre avant (23) ou de manière à être en contact avec celle-ci et/ou la marque d'alignement (23c) est formée pour avoir une forme polygonale positionnée de telle sorte qu'un bord est en contact avec une extrémité la plus basse de la vitre avant (23).

4. Appareil de traitement de linge selon l'une quelconque des revendications 1, 2 ou 3, dans lequel le châssis de porte (21) inclut un châssis extérieur (21a) et un châssis intérieur (21b), le châssis intérieur (21b) ayant un extérieur relié à la partie circonférentielle extérieure du châssis extérieur (21a), et ayant un intérieur relié à une périphérie extérieure d'un hublot de porte (22).

5. Appareil de traitement de linge selon la revendication 4, dans lequel une partie circonférentielle extérieure du châssis extérieur (21a) entoure une surface latérale extérieure de la vitre avant (23).

6. Appareil de traitement de linge selon la revendication 4 ou 5, dans lequel un guide d'alignement (21c) est formé sur le châssis extérieur (21a) à une position correspondant à la marque d'alignement (23c).

7. Appareil de traitement de linge selon l'une quelconque des revendications précédentes, dans lequel la vitre avant (23) est formée comme un cercle complet ayant un rayon prédéfini et/ou est formée en verre et/ou dans lequel un centre (O') de la zone transparente (23a) est positionné pour être excentré par rapport au centre (O) de la vitre avant (23) vers un côté supérieur de la vitre avant (23).

8. Appareil de traitement de linge selon l'une quelconque des revendications précédentes, dans lequel le châssis de porte (21) comporte un guide de montage (21a") ayant un diamètre intérieur prédéfini, dans lequel le guide de montage (21a") fait saillie de manière à entourer une surface circonférentielle extérieure de la vitre avant (23) de forme annulaire.

9. Appareil de traitement de linge selon l'une quelconque des revendications précédentes, comportant en outre un adhésif (26) appliqué entre le châssis de porte (21) et la vitre avant (23) pour fixer la vitre avant (23) au châssis de porte (21).

10. Appareil de traitement de linge selon la revendication 9, dans lequel le châssis de porte (21) inclut une rainure de remplissage d'adhésif (21a1), dans lequel la rainure de remplissage d'adhésif (21a1) inclut au moins un élément parmi :
une partie d'application d'adhésif (21a1') configurée pour fournir un espace pour appliquer l'adhésif (26), et formée pour entourer l'orifice (21a') ; et
au moins une partie de recueil d'adhésif (21a1") formée pour s'étendre parallèlement le long de la partie de l'application d'adhésif (21a1'), sur un ou deux côtés de la partie d'application d'adhésif (21a1'), de manière à recueillir l'adhésif s'échappant de la partie d'application d'adhésif (21a1').

11. Appareil de traitement de linge selon la revendication 10, dans lequel la marque d'alignement (23c) est agencée pour être recouverte par la partie d'application d'adhésif (21a1').

12. Appareil de traitement de linge selon l'une quelconque des revendications 9, 10 ou 11, dans lequel l'adhésif (26) est formé de la même couleur que la zone opaque (23b).

13. Appareil de traitement de linge selon la revendication 10, 11 ou 12, dans lequel la rainure de remplissage d'adhésif (21a1) est prévue pour être remplie d'un adhésif destiné à fixer la vitre avant (23) au châssis de porte (21).

14. Appareil de traitement de linge selon l'une quelconque des revendications 10, 11, 12 ou 13, dans lequel la rainure de remplissage d'adhésif (21a1) est formée sur une surface avant du châssis de porte (21), et/ou la rainure de remplissage d'adhésif (21a1) a une forme annulaire ayant un rayon prédéfini, le long d'une circonférence du guide de montage (21a"), de manière à entourer l'orifice (21a').

15. Appareil de traitement de linge selon l'une quelconque des revendications 10, 11, 12, 13 ou 14, dans lequel un intervalle entre le guide de montage (21a") et la rainure de remplissage d'adhésif (21a1') est constant le long de la circonférence du guide de montage (21a").
